# EUROPEAN PATENT SPECIFICATION

(11) **EP 3 638 871 B1**
(45) Date of publication and mention of the grant of the patent: **31.03.2021**
(21) Application number: 18742705.9
(22) Date of filing: 13.06.2018
(51) Int. Cl.: E21B 29/00, B26D 1/08, F16L 55/105, B23D 21/00, B23D 29/00, B26D 3/16, B26D 1/00

(54) **TOOL FOR CUTTING WELL TUBULAR**
WERKZEUG ZUM SCHNEIDEN VON BOHRLOCHROHREN
OUTIL DE DÉCOUPAGE DE TUBE DE PUITS

(30) Priority: 16.06.2017 NO 20170993
(43) Date of publication of application: 22.04.2020
(73) Proprietor: Nor Oil Tools AS, 4072 Randaberg (NO)
(72) Inventor: HETLAND, Sølve, 4318 Sandnes (NO)
(74) Representative: Onsagers AS
(86) International application number: PCT/EP2018/065595
(87) International publication number: WO 2018/229097

(56) References cited:
- US-A1- 2012 291 606
- US-A1- 2012 298 372
- US-B1- 7 351 010

## Description

The invention concerns a pipe cutting tool comprising a stationary knife fixed in a first plane in a frame, and a translatable knife which can be slidably moved along knife translation paths arranged in a second plane of said plane.

Abandonment of a well in the underground, for example a non-profitable hydro carbon well, is challenging and expensive, particularly when the well is a subsea well. Among other things, it may be pertinent to pull pipes from the well and cut them into suitable pieces for further handling. Often, coupled pipe joints will not be further cut into pieces, because the pipes are not re-usable and a further division takes too long.

To cut the pipes with some form of cutting tool is known, for example using rotating saw blade; see, e.g., US 4458421 A and NO 320571 B1, cutting cable or wire coated with diamonds; see, e.g., EP 0540834 A1, abrasive liquid jet under high pressure; see, e.g., NO 314733 B1, and hydraulically operated shearing blades.

US 7351010 discloses a pipe cutting tool comprising a stationary knife fixed in a first plane to a frame, and a translatable knife (14) which can be slidably moved along knife translation paths arranged in a second plane of said frame.

Also, from NO 20111567, there is known a pipe cutting tool comprising a stationary knife with a moveable knife which by an actuator can be slidably moved linearly in the direction of the stationary knife.

A disadvantage of the prior art solutions is that the cutting into pieces takes a long time, there is a risk of generating sparks in an explosive environment, there is a risk for discharging polluted liquids from the pipe, and operators will have to linger close to suspended load which in a sudden release of engagement with the pipe being cut to pieces may swing out from its engaged position.

The purpose of the invention is to mitigate or reduce at least one of the disadvantages of the prior art, or at least provide a useful alternative to the prior art solutions.

The purpose is achieved with the features disclosed in the following disclosure, and in the following patent claims.

The invention provides a pipe cutting tool comprising a stationary knife fixedly attached in a first plane in a frame, and a translatable knife that can be slidably moved in a second plane in said frame, wherein the translatable knife is arranged transverse to the stationary knife in such a way that a pipe arranged in an aperture between the knives in a cutting phase is at least partially surrounded by the knives.

At the side of the stationary knife facing away from the section of the pipe to be cut lose there is preferably arranged a curved first abutment with diameter of curvature substantially equal to the external diameter of the pipe. The first abutment is preferably rigidly coupled to the stationary knife, as the cutting edge of the stationary knife and the first abutment have coinciding centers of curvature. A curved second abutment having a diameter of curvature substantially equal to the external diameter of the pipe is preferably arranged at the side of the translatable knife facing the section of the pipe to be cut. The second abutment is preferably rigidly connected to the translatable knife, as the cutting edge of the translatable knife and the second abutment have coinciding centers of curvature.

The knives are designed concavely curved.

Each of the fixed and translatable knife typically cover a sector of up to 180 degrees. Each curved knife edge is preferably limited by lateral edges. The lateral edges are preferably symmetrically arranged around a longitudinal axis through the frame and the centers of the knives, and the lateral edges may have coinciding direction.

The translatable knife is connected to one or more actuators aligned to slidably move said knife along guiding paths in the frame. The actuator(s) is/are preferably formed as hydraulic cylinder(s) which is/are connected to a hydraulic power unit.

The pipe cutting tool is in an operative condition arranged to be freely slidably moved in the radial direction of the pipe. Consequently, the reaction forces from the push of the translatable knife against the pipe will always be absorbed by the fixed knife through shifting of the frame and the fixed knife. Typically, the frame may be suspended from chains, struts or the like. In a preferred embodiment, the frame is suspended in a carriage using a resilient strut. Thus, the frame will "float" such that the knives are substantially exposed to forces having a direction coinciding with the respective knife planes.

In an alternative embodiment, there is arranged a separate movable secondary abutment at one side of the translatable knife facing away from the pipe section to be cut, as the secondary abutment is equipped with one or more actuators arranged to hold the pipe firmly in a grip between the secondary abutment and the fixed knife, at least in a preliminary phase of the cutting operation.

The frame can be dividable in a distance from the fixed knife. Thus, the pipe cutting tool can be arranged in a cutting position at a rising pipe without having to be treaded onto the rising end part of the pipe, by, in an open position, being guided radially in towards the pipe before the frame is closed such that the frame subsequently encloses a section of the pipe.

More specifically, the invention concerns a pipe cutting tool comprising a stationary knife fixed in a first plane in a frame, and a translatable knife which can be slidably moved along knife translation paths, arranged in a second plane in said frame, characterized in that
the knives and frame delimit a central frame aperture, as
the frame aperture forms a passageway for a pipe to be cut,
the translatable knife is arranged diametrically opposite the stationary knife,
the knives have curved knife edges,
each of the knifes covers a sector of up to 180°,
the translatable knife is connected to the frame via a linear actuator system, and, the frame is dividable, as the stationary knife is fixed to a first frame section, and the translatable knife is attached to a second frame section which is lockably connected to the first frame section with a hinge arrangement.

The translatable knife can be arranged in a plane different from the stationary knife, and the translatable knife can be slidably moved to overlap with the fixed knife.

The frame can be dividable, as the stationary knife is fixed to a first frame section, and the translatable knife is attached to a second frame section. The second frame section can be lockably connected to the first frame section with a hinge arrangement.

Each knife can be coupled to pipe abutments arranged in a distance from the respective knives edges and with a radius of curvature substantially equal to the external radius of the pipe.

The frame can be attached in a resilient suspension.

In the following, examples of preferred embodiments are described, which are shown in the appended drawings, wherein:
Fig. 1 shows a principle drawing of a pipe cutting tool according to the invention in a basic outline,
Fig. 2 shows a principle drawing of a pipe cutting tool in a lateral outline, shown suspended in a roller path,
Figs. 3-6 show principle drawings of the pipe cutting tool according to figure 1 in different phases of cutting a pipe, viewed in basic outline,
Fig. 7 shows in perspective an embodiment of the pipe cutting tool in open position,
Fig. 8 shows in perspective the embodiment of the pipe cutting tool according to figure 7, in a closed position with a translatable knife in a retracted position,
Fig. 9 shows in perspective, seen from below, the embodiment of the pipe cutting tool according to figure 7 in closed position, with a movable pipe abutment in a position slidably moved outward, and
Fig. 10 shows in perspective, viewed from below, the embodiment of a pipe cutting tool according to figure 7 in closed position with the translatable knife in a position slidably moved outward.

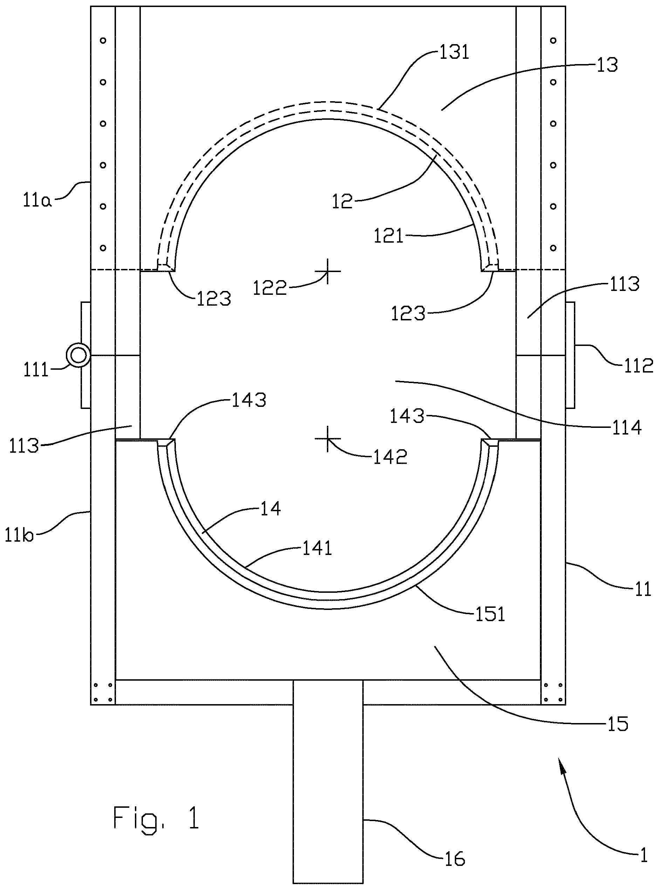

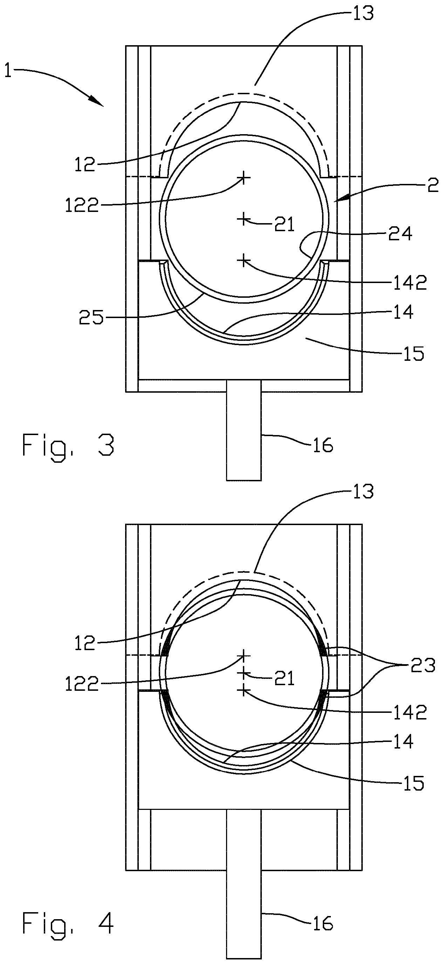

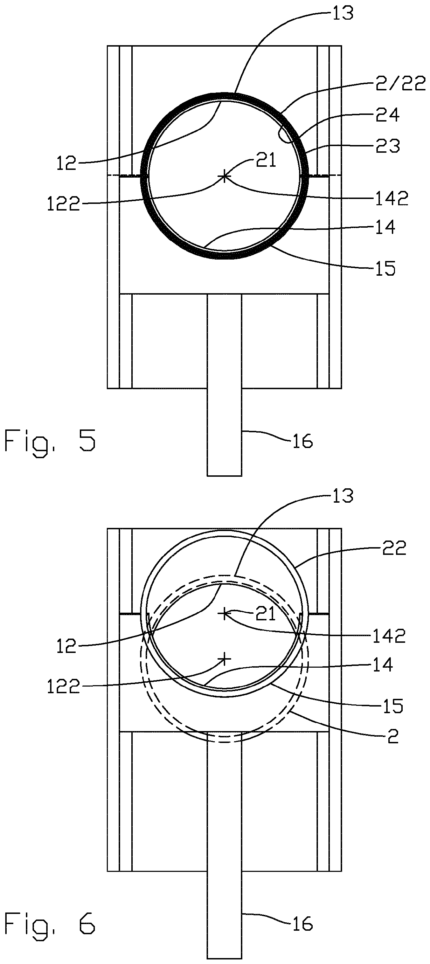

Firstly, reference is made to Figure 1, wherein the reference number 1 refers to a pipe cutting tool, in which a fixed knife 12 and a translatable knife 14 are arranged in a frame. Both knives 12, 14 are planar, and have a concave, semi-circular knife edges 121, 141, respectively; adapted to the dimensions of a pipe 2 (see, Figures 4-7) to be cut. The diameter of curvature of the knives edges 121, 141 are maximally equal to an inner diameter of the pipe 2. Each knife edge 121, 141 is limited by lateral edges 123, 143, respectively; which are here arranged in a substantial radial direction relative the semi-circular knives edges 121, 141. Advantageously, the lateral edges 123, 143 are symmetrical about an axial plane through the centers of curvature of the knives edges, to counteract the lateral forces applied to the knives 12, 14 caused by the intrusion into the pipe by the lateral edges 123, 143.

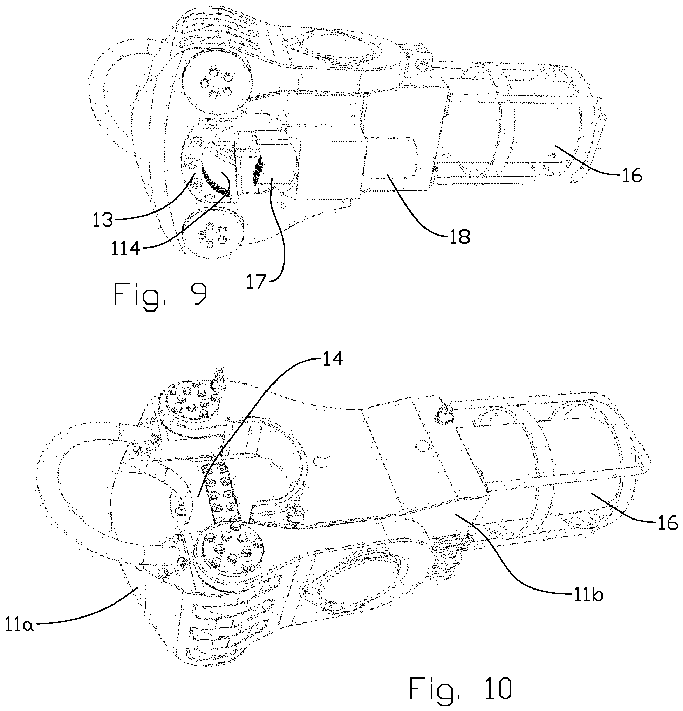

The fixed knife 12 is fixed to the frame 11 in a first plane. The translatable knife 14 is arranged to be slidably moved in a second plane between a retracted initial position and a position slidably moved outward. Because the first and second planes are parallel and arranged in a distance to each other, the translatable knife 14 can overlap the fixed knife 12 when in a position slidably moved outward, such as shown in Figure 10.

The frame 11 is equipped with knife guiding paths 113 which are aligned to guide the translatable knife 14 during its shifting.

A linear actuator system 16 is connected to the translatable knife 14 and the frame 11, and is arranged to slidably move the translatable knife 14. The linear actuator system 16 can be formed from one or more hydraulic cylinders connected to a hydraulic power unit with corresponding control valve (not shown).

The fixed knife 12 and the translatable knife 14 are equipped their own pipe abutment 13, 15, respectively. The pipe abutments 13, 15 have concave abutment faces 131, 151, respectively; with diameter corresponding to the external diameter of the pipe 2. The centers of curvature of the abutment faces 131, 151 are coinciding with the centers of curvature 122, 142, respectively, of the respective knives edges 121, 141.

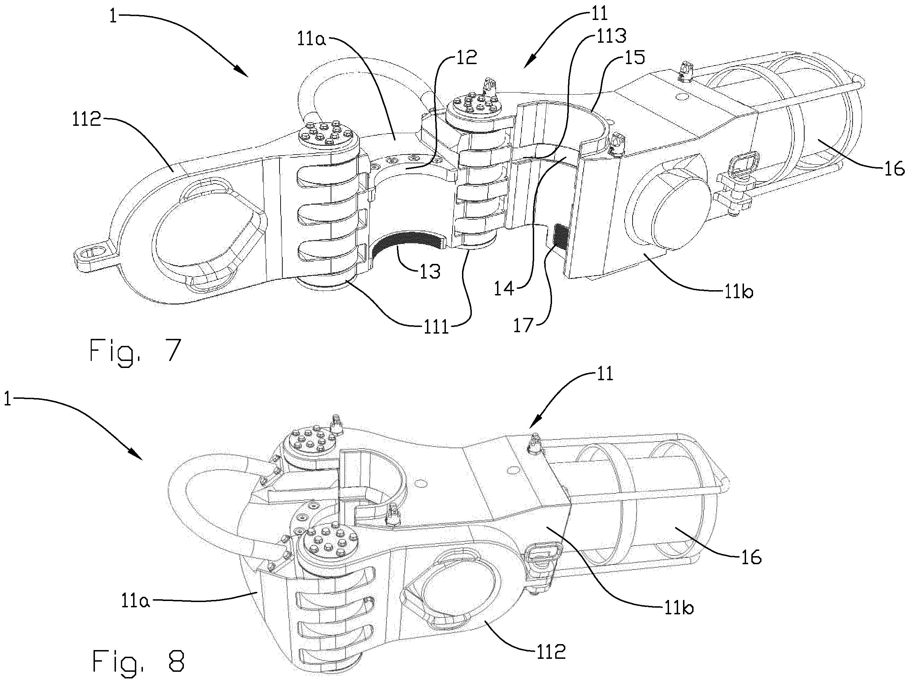

The frame 11 comprises a first and a second frame section 11a, 11b, which are connected by a hinge arrangement 111 and a frame lock 112. The frame lock 112 can be pivotally attached in one of the first and second frame section 11a, 11b, and is aligned to engage lockingly with a section of the second of the first and second frame section 11a, 11b; see especially Figures 7 and 8. Thus, the frame 11 can be opened such as shown in Figure 7. This simplifies connecting the pipe cutting tool 1 and the pipe 2 to be cut.

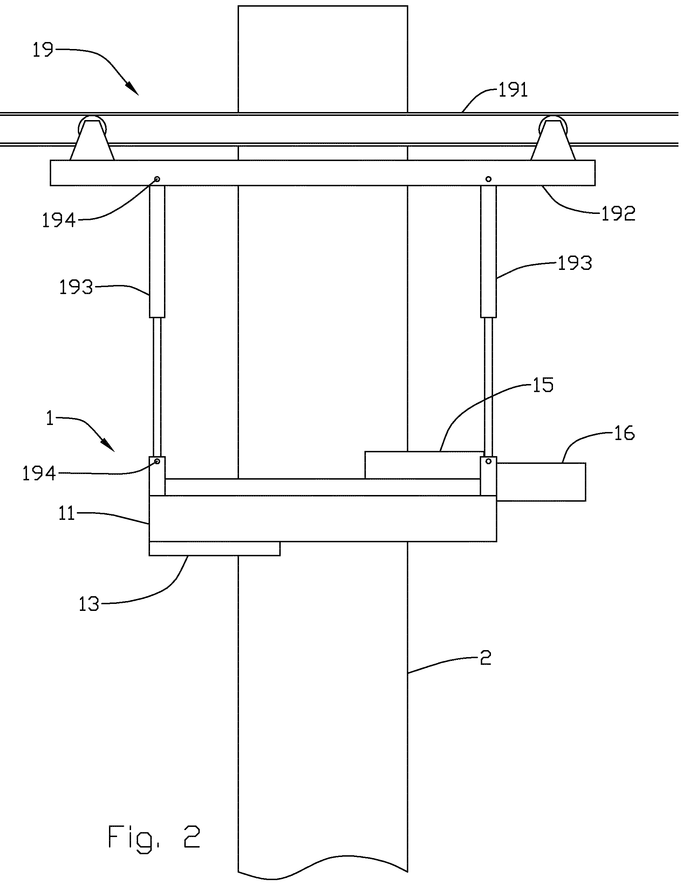

Reference is now made to Figure 2, wherein it is shown an example of an arrangement 19 for resilient suspension of the pipe cutting tool 1, as the pipe cutting tool 1 is suspended in strut 193 from a carriage 192 which can be slidably moved along a roller path 191. The struts 193 allow the pipe cutting tool 1 to move relative the carriage 192, for example in that the struts 193are telescopic and connected with the carriage and with the pipe cutting tool via pivot joint 194. In its simplest embodiment, the struts 193 may be formed from chains. The purpose of the suspension arrangement 19 is to allow the pipe cutting tool 1 to position itself relative the pipe 2 without inflicting substantial strain to the suspension arrangement or pipe cutting tool 1 due to directional deviations and/or lacking centering of the pipe cutting tool 1 relative the pipe 2.

Figures 7-10 show a practical embodiment of the pipe cutting tool 1; here shown without suspension arrangement 19.

Advantageously, the pipe cutting tool 1 is equipped with a movable secondary abutment 17 (see, Figures 7 and 9). The secondary abutment 17 is coupled to a secondary abutment actuator 18, typically in the form of a hydraulic cylinder connected to a hydraulic power unit with a corresponding control valve (not shown). Using the secondary abutment 17 and the fixed knife 12, the pipe cutting tool 1 can be fixed onto the pipe 2 before the translatable knife 14 is slidably moved against the pipe 2.

It should be mentioned that all the above-mentioned embodiments illustrate the invention; however, without limiting the invention, and the skilled artisan in the field will be able to contemplate many alternative embodiments without deviating from the scope of the enclosed claims. In the claims, reference numbers in brackets shall not be construed as limiting.

The use of the verb "to comprise" and its different forms do not exclude the presence of elements or steps which are not mentioned in the claims. The article "a" before an element do not exclude the presence of several such elements.

## Claims

1. Pipe cutting tool (1) comprising a stationary knife (12) fixed in a first plane to a frame (11), and a translatable knife (14) which can be slidably moved along knife translation paths (113) arranged in a second plane of said frame (11),
wherein the knives (12, 14) and the frame (11) delimit a central frame aperture (114), as the frame aperture (114) forms a passageway for a pipe (2) to be cut, the translatable knife (14) being arranged diametrically opposite the stationary knife (12), and
the translatable knife (14) is connected to the frame (11) via a linear actuator system (16) and wherein said frame (11) is dividable, with the stationary knife (12) being attached to a first frame section (11a), and the translatable knife (14) being attached to a second frame section (11b) which is lockable coupled to the first frame section (11a) with a hinge arrangement (111), **characterized in that**
the knives (12, 14) have curved knife edges (121, 141), with each of the knives (12, 14) covering a sector of up to 180 ° and having a radius of curvature substantially equal to an external radius of the pipe (2) to be cut, each knife being further equipped with a pipe abutment (13/15) with an abutments face (131/151), the abutment faces (131/151) having a diameter corresponding to the external diameter of the pipe to be cut and centers of curvature coinciding with centers of curvature of the knives edges (121, 141).

2. Pipe cutting tool (1) according to claim 1,
wherein the translatable knife (14) is arranged in a plane different from the stationary knife (12), and, the translatable knife (14) is slidably movable to overlap the fixed knife (12).

3. Pipe cutting tool according to claim 1, further comprising a movable abutment member (17) movable by an abutment actuator (18) into engagement with the pipe (2) to be cut, the movable abutment member arranged to fix the pipe cutting tool onto the pipe (2) prior to the translatable knife being moved against the pipe (2).

4. Pipe cutting tool (1) according to one of the preceding claims,
wherein the frame (11) is attached in a resilient suspension (19), arranged such that the pipe cutting tool may be fixed to the pipe (2) for cutting as the pipe is vertically pulled from the well.

5. Pipe cutting tool (1) according to one of the preceding claims,
wherein each of the curved knives edges (121, 141) are delimited by lateral edges (123, 143) having a direction deviating from adjacent sections of the curved knives edges (121, 141).

## Patentansprüche

1. Rohrschneidwerkzeug (1), umfassend ein stationäres Messer (12), das in einer ersten Ebene an einem Rahmen (11) befestigt ist, und ein translatierbares Messer (14), das entlang Messer-Translationswegen (113), die in einer zweiten Ebene des Rahmens (11) angeordnet sind, verschiebbar bewegt werden kann, wobei die Messer (12, 14) und der Rahmen (11) eine zentrale Rahmenöffnung (114) begrenzen, wenn die Rahmenöffnung (114) einen Durchgang für ein zu schneidendes Rohr (2) bildet, das translatierbare Messer (14) diametral gegenüber dem stationären Messer (12) angeordnet ist und das translatierbare Messer (14) über ein lineares Betätigungssystem (16) mit dem Rahmen (11) verbunden ist, und wobei der Rahmen (11) teilbar ist, wobei das stationäre Messer (12) an einem ersten Rahmenabschnitt (11a) befestigt ist und das translatierbare Messer (14) an einem zweiten Rahmenabschnitt (11b) befestigt ist, welcher mit einer Scharnieranordnung (111) verriegelbar an den ersten Rahmenabschnitt (11a) gekoppelt ist, **dadurch gekennzeichnet, dass** die Messer (12, 14) gebogene Messerkanten (121, 141) haben, wobei jedes der Messer (12, 14) einen Sektor von bis zu 180° abdeckt und einen Krümmungsradius aufweist, der im Wesentlichen gleich einem Außenradius des zu schneidenden Rohrs (2) ist, jedes Messer ferner mit einem Rohrwiderlager (13/15) mit einer Widerlagerfläche (131/151) ausgestattet ist, wobei die Widerlagerflächen (131/151) einen Durchmesser, der dem Außendurchmesser des zu schneidenden Rohrs entspricht, und Krümmungszentren, die mit Krümmungszentren der Messerkanten (121, 141) übereinstimmen, aufweisen.

2. Rohrschneidwerkzeug (1) nach Anspruch 1, wobei das translatierbare Messer (14) in einer Ebene angeordnet ist, die sich von der des stationären Messers (12) unterscheidet, und das translatierbare Messer (14) verschiebbar beweglich ist, um das befestigte Messer (12) zu überlappen.

3. Rohrschneidwerkzeug (1) nach Anspruch 1, das ferner ein bewegliches Widerlagerelement (17) umfasst, das durch ein Widerlagerbetätigungselement (18) in Eingriff mit dem zu schneidenden Rohr (2) bewegbar ist, wobei das bewegbare Widerlagerelement angeordnet ist, um das Rohrschneidwerkzeug an dem Rohr (2) zu befestigen, bevor das translatierbare Messer gegen das Rohr (2) bewegt wird.

4. Rohrschneidwerkzeug (1) nach einem der vorangehenden Ansprüche, wobei der Rahmen (11) in einer elastischen Aufhängung (19) angebracht ist, die so angeordnet ist, dass das Rohrschneidwerkzeug an dem Rohr (2) zum Schneiden befestigt werden kann, wenn das Rohr senkrecht aus dem Bohrloch gezogen wird.

5. Rohrschneidwerkzeug (1) nach einem der vorangehenden Ansprüche, wobei jede der gebogenen Messerkanten (121, 141) durch seitliche Kanten (123, 143) begrenzt wird, die eine Richtung haben, die von der benachbarter Abschnitte der gebogenen Messerkanten (121, 141) abweicht.

## Revendications

1. Outil de découpage de tube (1) comprenant une lame stationnaire (12) qui est fixée dans un premier plan à une structure (11) et une lame pouvant être translatée (14), laquelle peut être déplacée de façon coulissante le long de trajectoires de translation de lame (113), qui est agencée dans un second plan de ladite structure (11), dans lequel les lames (12, 14) et la structure (11) délimitent une ouverture de structure centrale (114), lorsque l'ouverture de structure (114) forme un passage pour un tube (2) qui doit être découpé, la lame pouvant être translatée (14) étant agencée de façon diamétralement opposée par rapport à la lame stationnaire (12), et la lame pouvant être translatée (14) est connectée à la structure (11) via un système d'actionneur linéaire (16) et dans lequel ladite structure (11) peut être divisée, la lame stationnaire (12) étant liée à une première section de structure (11a) et la lame pouvant être translatée (14) étant liée à une seconde section de structure (11b) qui est couplée de façon blocable à la première section de structure (11a) au moyen d'un agencement de charnière (111), **caractérisé en ce que** les lames (12, 14) comportent des arêtes de lame incurvées (121, 141), chacune des lames (12, 14) couvrant un secteur allant jusqu'à 180° et présentant un rayon de courbure qui est sensiblement égal à un rayon externe du tube (2) qui doit être découpé, chaque lame étant en outre munie d'une butée de tube (13/15) qui comporte une face de butée (131/151), les faces de butée (131/151) présentant un diamètre qui correspond au diamètre externe du tube qui doit être découpé et des centres de courbure qui coïncident avec des centres de courbure des arêtes de lames (121, 141).

2. Outil de découpage de tube (1) selon la revendication 1, dans lequel la lame pouvant être translatée (14) est agencée dans un plan qui est différent de celui de la lame stationnaire (12), et la lame pouvant être translatée (14) peut être déplacée de façon coulissante de manière à ce qu'elle chevauche la lame fixe (12).

3. Outil de découpage de tube selon la revendication 1, comprenant en outre un élément de butée mobile (17) qui peut être déplacé par un actionneur de butée (18) pour être amené en engagement avec le tube (2) qui doit être découpé, l'élément de butée mobile étant agencé pour fixer l'outil de découpage de tube sur le tube (2) avant que la lame pouvant être translatée ne soit déplacée contre le tube (2) .

4. Outil de découpage de tube (1) selon l'une quelconque des revendications précédentes, dans lequel la structure (11) est liée dans une suspension élastique (19), laquelle est agencée de telle sorte que l'outil de découpage de tube puisse être fixé sur le tube (2) pour le découpage lorsque le tube est extrait verticalement du puits.

5. Outil de découpage de tube (1) selon l'une quelconque des revendications précédentes, dans lequel chacune des arêtes de lames incurvées (121, 141) est délimitée par des arêtes latérales (123, 143) qui présentent une direction qui est déviée par rapport à des sections adjacentes des arêtes de lames incurvées (121, 141).
